# EUROPEAN PATENT APPLICATION

(11) **EP 4 563 028 A1**
(43) Date of publication of application: **04.06.2025**
(21) Application number: 24157463.1
(22) Date of filing: 13.02.2024
(51) Int. Cl.: A24F 40/90

(54) **A CONTROL ARRANGEMENT FOR AN AEROSOL PROVISION DEVICE**

(30) Priority: 30.11.2023 CN 202311644142
(71) Applicant: Nicoventures Trading Limited, London WC2R 3LA (GB)
(72) Inventor: ZHANG, Lianhua, Shenzhen (CN); WANG, Tianyi, Shenzhen (CN); THOMAS, Michael, London, WC2R 3LA (GB)
(74) Representative: Dehns

(57) **Abstract**

A control arrangement 110 for use with an aerosol provision device 102 comprising an energy storage device 106, wherein the control arrangement 110 is configured to determine whether the energy storage device 106 has reached its end of life. When it is determined that the energy storage device 106 has reached its end of life to permit charging of the energy storage device 106 and set a charging parameter of the energy storage device 106 such that charging of the energy storage device 106 is changed compared to charging of the energy storage device 106 prior to having reached its end of life; and/or permit discharging of the energy storage device 106 and set a discharging parameter of the energy storage device 160 such that discharging of the energy storage device 106 is changed compared to discharging of the energy storage device 106 prior to having reached its end of life.

## Description

### Technical Field

The present invention relates to a control arrangement for an aerosol provision device. The present invention also relates to an aerosol provision device comprising such a control arrangement, an aerosol provision system comprising an aerosol provision device and an article comprising an aerosol generating material, and a method for controlling operation of an energy storage device in an aerosol provision device.

### Background

Smoking articles such as cigarettes, cigars and the like burn tobacco during use to create tobacco smoke. Attempts have been made to provide alternatives to these articles by creating products that release compounds without combusting. Examples of such products are so-called "heat not burn" products or tobacco heating devices or products, which release compounds by heating, but not burning, material. The material may be, for example, tobacco or other non-tobacco products, which may or may not contain nicotine.

### Summary

In an aspect, there is provided a control arrangement for use with an aerosol provision device comprising an energy storage device. The control arrangement is configured to determine whether the energy storage device has reached its end of life; and when it is determined that the energy storage device has reached its end of life to: permit charging of the energy storage device and set a charging parameter of the energy storage device such that charging of the energy storage device is changed (e.g. limited) compared to charging of the energy storage device prior to having reached its end of life; and/or permit discharging of the energy storage device and set a discharging parameter of the energy storage device such that discharging of the energy storage device is changed (e.g. limited) compared to discharging of the energy storage device prior to having reached its end of life.

The end of life of the energy storage device may occur when a condition of the energy storage device deteriorates to a point where further uses becomes unsafe or limited.

The energy storage device may comprise one or more batteries.

The charging parameter may comprise at least one of: a charging voltage and a charging current of a charging cycle of the energy storage device. The charging voltage may be a maximum charging voltage applied during a charging cycle. The control arrangement may be configured to set the charging parameter by reducing the charging voltage compared to a prior charging voltage applied during a charging cycle having occurred prior to the energy storage device having reached its end of life. This may reduce the maximum amount of energy that can be stored within the energy storage device. The charging current may be a maximum charging current applied during a charging cycle. The control arrangement may be configured to set the charging parameter by reducing the charging current compared to a prior charging current applied during a prior charging cycle having occurred prior to the energy storage device having reached its end of life. This may reduce the rate of charging during a charging cycle.

The discharging parameter may comprise a maximum number of discharges of the energy storage device during a discharge cycle. Prior to reaching end of life, the discharging parameter may not be set. The maximum number of discharges may be no more than 5, e.g. no more than 4, e.g. no more than 3. A discharge of the energy storage device may comprise sufficient power for the provision of a session of use by the aerosol provision device. A session of use may comprise a plurality of inhalations from the aerosol provision device (e.g. at least 2 and a maximum of 10 inhalations). A session of use may correspond to the power storage device being capable of providing power for consumption by the aerosol provision device for a period of 200-350 seconds, e.g. 220-330 seconds, e.g. 240-310 seconds, e.g. 260-290 seconds.

The discharge parameter may comprise a rate of discharge of the energy storage device. The rate of discharge may be a maximum rate of discharge.

Setting the discharge parameter may comprise reducing the rate of discharge compared to the rate of discharge set during a discharging cycle having occurred prior to the energy storage device having reached its end of life. The rate of discharge may determine rate at which a heating element increases in temperature/heats up. Setting the discharge parameter may comprise limiting a discharge current/voltage to below a predetermined discharge current/voltage threshold value.

Determining the end of life of the energy storage device may comprise measuring a characteristic of the energy storage device. The characteristic may be at least one of: an expansion rate, an amount of expansion, a storage capacity, a change of the storage capacity, a state of health, the time taken to charge the energy storage device, a number of times which the energy storage device has discharged power and a number of sessions of use for which the energy storage device has provided power for. The control arrangement may be configured to determine that the energy storage device has reached its end of life when the characteristic meets a pre-determined threshold (e.g. 10000 sessions of use, or 10% expansion, or 50% decrease in storage capacity).

The control arrangement may further comprise a sensor configured to measure (i.e. determine) the characteristic of the energy storage device. The sensor may be configured to measure the storage capacity of the energy storage device. For example, the sensor may be a capacitance sensor. The sensor may be configured to detect expansion of the energy storage device. The sensor may measure a force exerted by the energy storage device as a result of expansion, e.g. pressure/force sensor.

The control arrangement may further comprise a timer configured to measure an amount of time that the energy storage device has been charging and/or discharging and wherein the control arrangement is configured to determine whether the energy storage device has reached the end of life based on the amount of time the energy storage device has been charging and/or discharging.

The control arrangement may further comprise a timer and/or a counter configured to determine the number of sessions of use for which the energy storage device has provided power for.

In yet another aspect, there is provided an aerosol provision device. The aerosol provision device comprises: an energy storage device; and a control arrangement according to any of the embodiments described above.

The aerosol provision device may be configured to receive an article comprising an aerosol generating medium.

In yet another aspect, there is provided an aerosol provision system. The aerosol provision system comprises: an article comprising an aerosol generating medium; and an aerosol provision device according to any embodiment described above.

In yet another aspect, there is provided a method for controlling operation of an energy storage device in an aerosol provision device. The method comprises determining whether the energy storage device has reached its end of life; and when it is determined that the energy storage device has reached its end of life; permitting charging of the energy storage device and setting a charging parameter of the energy storage device such that charging of the energy storage device is changed (e.g. limited) compared to charging of the energy storage device prior to having reached its end of life; and/or permitting discharging of the energy storage device and setting a discharging parameter of the energy storage device such that discharging of the energy storage device is changed (e.g. limited) compared to discharging of the energy storage device prior to having reached its end of life.

The charging parameter may be a charging voltage applied during a charging cycle. Additionally or alternatively, the charging parameter may be a charging current applied during a charging cycle. The charging voltage may be smaller than a prior charging voltage applied during a prior charging cycle having occurred prior to the energy storage device having reached its end of life. The charging current may be smaller than a charging current applied during a prior charging cycle having occurred prior to the energy storage device having reached its end of life. The discharging parameter may comprise a maximum number of discharges of the energy storage device during a discharge cycle. The discharge parameter may comprise a rate of discharge of the energy storage device. Setting the discharge parameter may comprise limiting a discharge current/voltage to below a predetermined discharge current/voltage threshold value.

Any of the features of the control arrangement set out above may be implemented appropriately by any of the methods above.

In yet another aspect, there is provided an aerosol provision device. The aerosol provision device comprises an energy storage device, a control arrangement configured to determine whether the energy storage device has reached an end of its life, and a display communicatively coupled to the control arrangement, the display is configured to display information indicative of the energy storage device having reached the end of its life.

The display may comprise a screen (e.g. an LCD screen or a LED screen). The information may be in the form of text or one or more symbols.

In yet another aspect, there is provided a method for operating an aerosol provision device. The method comprises determining, by a control arrangement, whether an energy storage device of the aerosol provision device has reached the end of its life; and displaying, by a display communicatively coupled to the control arrangement, information indicative of the energy storage device having reached the end of its life.

Any of the features of the aerosol provision device comprising the display set out above may also be appropriately implemented by the method above.

### Brief Description of the Drawings

Various embodiments will now be described, by way of example only, with reference to the accompanying schematic drawings, in which:
Figure 1 shows a schematic illustration (not to scale) of an aerosol provision system in accordance with an embodiment of the present invention;
Figure 2 shows a schematic illustration (not to scale) of another aerosol provision system in accordance with another embodiment of the present invention; and
Figure 3 shows a flowchart of a method for controlling operation of energy storage device in an aerosol provision device, in accordance with a further embodiment of the present invention.

### Detailed Description

As used herein, the term "aerosol-generating material" is a material that is capable of generating aerosol, for example when heated, irradiated or energized in any other way. Aerosol-generating material may, for example, be in the form of a solid, liquid or gel which may or may not contain an active substance and/or flavourants. Aerosol-generating material may include any plant based material, such as tobacco-containing material and may, for example, include one or more of tobacco, tobacco derivatives, expanded tobacco, reconstituted tobacco or tobacco substitutes. Aerosol-generating material also may include other, non-tobacco, products, which, depending on the product, may or may not contain nicotine. Aerosol-generating material may for example be in the form of a solid, a liquid, a gel, a wax or the like. Aerosol-generating material may for example also be a combination or a blend of materials. Aerosol-generating material may also be known as "smokable material".

The aerosol-generating material may comprise a binder and an aerosol former. Optionally, an active and/or filler may also be present. Optionally, a solvent, such as water, is also present and one or more other components of the aerosol-generating material may or may not be soluble in the solvent. In some embodiments, the aerosol-generating material is substantially free from botanical material. In some embodiments, the aerosol-generating material is substantially tobacco free.

The aerosol-generating material may comprise or be an "amorphous solid". The amorphous solid may be a "monolithic solid". In some embodiments, the amorphous solid may be a dried gel. The amorphous solid is a solid material that may retain some fluid, such as liquid, within it. In some embodiments, the aerosol-generating material may, for example, comprise from about 50wt%, 60wt% or 70wt% of amorphous solid, to about 90wt%, 95wt% or 100wt% of amorphous solid.

The aerosol-generating material may comprise an aerosol-generating film. The aerosol-generating film may comprise or be a sheet, which may optionally be shredded to form a shredded sheet. The aerosol-generating sheet or shredded sheet may be substantially tobacco free.

According to the present disclosure, a "non-combustible" aerosol provision system (sometimes referred to as "an aerosol provision system") is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable (sometimes referred to as an "article") for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source (e.g. an energy storage device) and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

An aerosol generating device can receive an article comprising aerosol generating material for heating. An "article" in this context is a component that includes or contains in use the aerosol generating material, which is heated to volatilise the aerosol generating material, and optionally other components in use. A user may insert the article into the aerosol generating device before it is heated to produce an aerosol, which the user subsequently inhales. The article may be, for example, of a predetermined or specific size that is configured to be placed within a heating chamber of the device which is sized to receive the article.

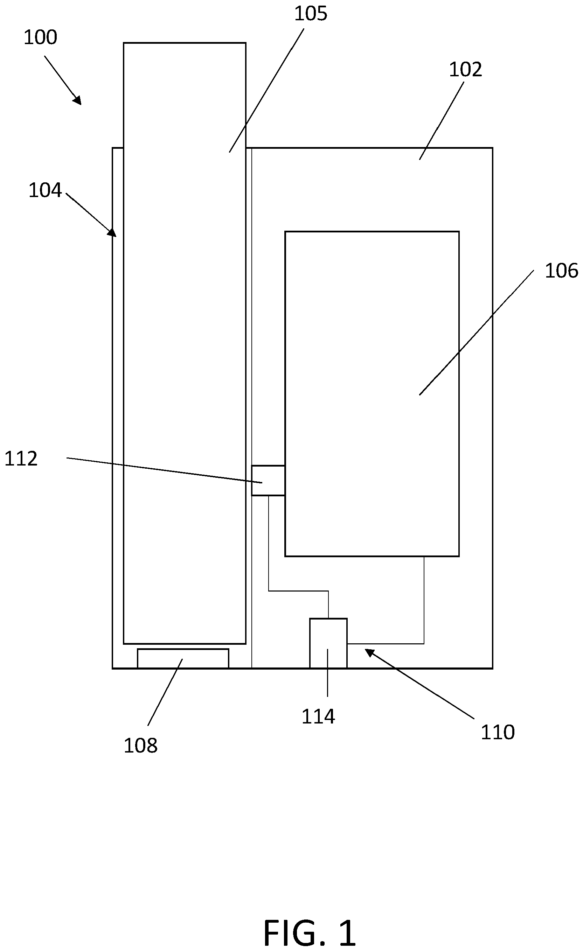

Figure 1 shows schematic illustration of an aerosol provision system 100 (which may be in the form of a non-combustible aerosol provision system) comprising an aerosol provision device 102 which comprises an article receiving portion 104 (e.g. in the form of a cavity within the device 102) for receiving, in use, an aerosol generating article 105. The aerosol generating article 105 may be provided separate to the aerosol provision device 102 and may be removable from the article receiving portion 104. The aerosol provision device 102 may further comprise an energy storage device 106, a heating arrangement 108, and a control arrangement 110. The heating arrangement 108 may be arranged to heat the aerosol generating article 105. The heating arrangement 108 may comprise any suitable means for heating the aerosol generating article 105. For example, the heating arrangement 108 may comprise a heating element configured to heat the aerosol generating article 105. The heating element may comprise a resistive or inductive heating element. In other embodiments, the heating arrangement may be at least partially provided with the aerosol generating article 105. In some embodiments, the article receiving portion 104 and/or the heating arrangement 108 and/or the energy storage device 106 may be omitted.

The aerosol generating article 105 may comprise an aerosol generating material/medium. The aerosol generating material may generate aerosol upon an application of heat. The energy storage device 106 may comprise one or more batteries or one or more capacitors or any other component(s) that can store electrical energy. The heating arrangement 108 may heat the aerosol generating article 105 received within the article receiving portion 104. The heating of the aerosol generating article 105 may cause the generation of aerosol therefrom which may be inhaled by a user.

In some embodiments, as depicted, the control arrangement 110 may be provided as a part of the aerosol provision device 102. However, in other embodiments, the control arrangement 110 may be provided as an individual entity separate from the aerosol provision device 102. As such, while the components and/or features of the control arrangement 110 are described herein in relation to an aerosol provision device, nevertheless, the following apply similarly to an individual separate control arrangement. For example, the control arrangement described herein may be applied to a retrofitting kit that is configured to adapt an existing aerosol provision device to have at least some of the components and/or features of the aerosol provision device 102.

In some embodiments, the control arrangement 110 may comprise a processor 114. The processor 114 may be configured to perform one or more of the functions of the control arrangement 110 discussed herein. In other embodiments, the control arrangement 110 does not comprise a processor. In such embodiments, the control arrangement 110 may comprise any suitable means to carry out the functions described herein.

In accordance with embodiments described herein, the control arrangement 110 may be configured to determine whether the energy storage device 106 has reached its end of life. The end of life of an energy storage device 106 may occur when the energy storage device deteriorates to a point where further use of the energy storage device becomes unsafe or limited. The deterioration may be a result of repeated use of the energy storage device 106 and/or wear and tear experienced by the energy storage device 106. The energy storage device 106 may expand, e.g. swell, as its number of uses and/or age increases. In this case, the end of life of the energy storage device 106 may occur when the energy storage device 106 swells to a point when further swelling may risk the energy storage device 106 to leak or break apart. In this case, further use may cause injury to nearby persons, e.g. the user, and/or the other components of the aerosol provision device 102. Another example of an end of life of an energy storage device 106 is when the present (i.e. current) maximum (storage) capacity (e.g. the present maximum energy storage capacity/maximum amount of energy that the energy storage device 106 can store and subsequently deliver for consumption) of the energy storage device 106 reduces to below a threshold capacity, e.g. 80% of the original capacity, i.e. 80% of the capacity of the energy storage device 106 when new. This reduction in the maximum capacity may be due to or may cause the breakdown (e.g. chemical or electrical) of the energy storage device 106 when charging or discharging the energy storage device 106. In this case, the risk of short circuits from the energy storage device 106 may also increase.

In some embodiments, the end of life of the energy storage device 106 may be when the ratio of the present (i.e. current) maximum capacity of the energy storage device 106 to the maximum capacity of the energy storage device 106 when new (i.e. when its capacity has not been depleted through use or age, also known as its rated capacity) is below a threshold ratio, e.g. below 85 %, e.g. below 80%. This ratio may be considered to be the state of health of the energy storage device 106.

The determination of the end of life of the energy storage device 106, as performed by the control arrangement 110, may comprise measuring one or more characteristics of the energy storage device 106. The characteristics of the energy storage device 106 may comprise at least one of: an expansion (e.g. swelling) rate, an amount of expansion (e.g. swelling), a storage capacity (e.g. a current/present maximum storage capacity), a change of the storage capacity (e.g. a change in the current/present maximum storage capacity), a state of health (e.g. the ratio of the current/present maximum charge capacity to its capacity when new/the rated capacity), the time taken to charge the energy storage device 106, a number of times which the energy storage device 106 has discharged power (e.g. the number of times it has discharged at least a certain percentage of its stored power) and a number of sessions of use for which the energy storage device 106 has provided power for. The one or more characteristics of the energy storage device 106 may comprise a total energy storage device operating time (i.e. the total operating time for the energy storage device). The total energy storage device operating time may be the total time since power was first provided by the energy storage device 106 for use by the aerosol provision device 102. This may, for example, be defined by the point at which the aerosol provision device 106 exits a shipping mode (e.g. when electrical power is first drawn from the energy storage device). This total energy storage device operating time may encompass the total time in which the energy storage device 106 is supplying power, the time in which it is receiving power (i.e. charging) and the time in which it is not supplying/receiving power.

In some embodiments, as depicted in Figure 1, the control arrangement 110 may comprise a sensor 112. The sensor 112 may be configured to measure a parameter/characteristic of the energy storage device 106. However, in other embodiments, the sensor 112 may be entirely omitted.

The sensor 112 may be configured to detect expansion/swelling of the energy storage device 106. For example, the sensor 112 may be configured to measure a force exerted by the energy storage device 106 as a result of expansion, e.g. the sensor 112 may comprise a pressure and/or force sensor. For example, the pressure and/or force sensor may be configured to measure the force between the energy storage device 106 and the compartment in which the energy storage device 106 resides or is positioned within. This is force/pressure may be indicative of the amount of the expansion/swelling exhibited by the energy storage device 106.

Additionally or alternatively, the control arrangement 110 may be configured to determine the maximum storage capacity of the energy storage device 106. This may be achieved by any suitable means. For example, the aerosol provision device 102, e.g. the control arrangement 110 thereof, may comprise a capacity sensor configured to measure the maximum capacity of the energy storage device 106. For example, the capacity sensor may be a capacitance sensor configured to measure the capacitance of the energy storage device 106. The capacity sensor may be a voltage or current sensor configured to measure the voltage or current output by the energy storage device 106. The capacity sensor may be considered to be or part of the sensor 112.

Additionally or alternatively, the control arrangement 110 may comprise a timer configured to measure an amount of time that the energy storage device 106 has been charging and/or discharging. The amount of time may be determined from a time when the energy storage device 106 is new, i.e. when the energy storage device 106 has yet to be charged/discharged even once. The timer may be considered to be or part of the sensor 112. In other embodiments, the timer may be configured to measure the time that the energy storage device has been charging during a single charging cycle, or discharging between two charging cycles. A charging cycle may be considered increasing the energy stored within the energy storage device 106 from at least partially (e.g. fully) empty to at least partially (e.g. full) maximum capacity. For example, a charging cycle may be considered increasing the energy stored within the energy storage device 106 by at least 50%, e.g. at least 60%, e.g. at least 70%, e.g. at least 80 %, e.g. at least 90%, e.g. at least 100% of its present storage capacity. A charging cycle may begin when energy is supplied to the energy storage device 106 and end when the supply of energy is stopped.

In some embodiments, the control arrangement 110 may be configured count a number of times which the energy storage device 106 has discharged power and/or a number of sessions of use for which the energy storage device 106 has provided power for. In other words, the control arrangement 110 may comprise a counter configured count a number of times which the energy storage device 106 has discharged power and/or a number of sessions of use for which the energy storage device 106 has provided power for. The counter may be considered to be or part of the sensor 112. A session of use may comprise a plurality of inhalations from the aerosol provision device 102 (e.g. the article 105 received therein) (e.g. 2 or more inhalations, or 3 or more inhalations, or 4 or more inhalations, or 5 or more inhalations, or 6 or more inhalations, or 7 or more inhalation, or 8 or more inhalation, or 9 or more inhalation, or 10 or more inhalations, or a maximum of 10 inhalations). In some embodiments, the plurality of inhalations comprises 2-10 inhalations, e.g. 3-8 inhalations, e.g. 4-6 inhalations. In some embodiments, a session of use may correspond to the energy storage device 106 being capable of providing power for consumption by the aerosol provision device 102 for a period of 200-350 seconds, e.g. 220-330 seconds, e.g. 240-310 seconds, e.g. 260-290 seconds. In such embodiments, the control arrangement 110 may comprise both a counter and a timer.

The control arrangement 110 may determine that the energy storage device 106 has reached its end of life when the one or more characteristics meets one or more respective pre-determined thresholds. For example, the control arrangement may determine an energy storage device 106 has reached the end of its life when the number of sessions of use for which the energy storage device has provided power for exceeds a threshold number of sessions, e.g. 7000 sessions, 8000 sessions, 9000 sessions, 10000 sessions, or when the capacity of the energy storage device 106 falls below a threshold capacity (e.g. a percentage of the charge capacity of the energy storage device 106), e.g. below 85%, e.g. below 80% of the charge capacity when the energy storage device 106 is new. Other examples include determining that the energy storage device 106 has reached its end of life when the charge capacity of the energy storage device drops below a threshold value, e.g. approximately 2000 mAh (wherein the original storage capacity is approximately 2500 mAh, e.g. 2580 mAh), or when the number of charging cycles is at least 250, e.g. at least 500, e.g. at least 600, or when the pressure detected by a pressure sensor exceeds a threshold pressure, e.g. 20 kPa, or when the force detected by a force sensor exceeds a threshold force, e.g. 0.7 N. Other examples include wherein the total time charging and/or discharging exceeds 800 hours, e.g. 1000 hours, and/or when the discharged power of the energy storage device exceeds 1400 Ah, and/or when the operating time of the device exceeds 1.5 years, e.g. 2 years. As will be appreciated, the various examples set out above may depend on specific parameters of the energy storage device 106, e.g. its size and initial capacity, as well as parameters of the aerosol provision device 102 e.g. the size of the article receiving portion 104 and/or the energy consumed by the heating arrangement 108.

The control arrangement 110 may, in some embodiments, be further configured, when it is determined that the energy storage device 106 has reached its end of life, to permit charging of the energy storage device 106 and set a charging parameter of the energy storage device 106 such that charging of the energy storage device 106 is changed (e.g. limited) compared to charging of the energy storage device 106 prior to having reached its end of life.

The charging parameter may be a charging voltage, e.g. a maximum charging voltage, applied to the energy storage device 106 during a charging cycle. The charging voltage may determine the maximum amount of energy that can be stored within the energy storage device 106. The charging voltage may be limited to be below a predetermined voltage value. As a result, the maximum amount of energy that can be stored within the energy storage device 106 can be limited. The charging voltage/maximum charging voltage may be smaller than a prior charging voltage/maximum charging voltage, i.e. the charging voltage/maximum charging voltage used during charging cycles when the energy storage device 106 was new or before the energy storage device 106 reached the end of its life.

The charging parameter may be a charging current, e.g. a maximum charging current, applied to the energy storage device 106 during a charging cycle. The charging current may determine the rate of charging of the energy storage device 106 during that charging cycle. The charging current may be limited to be below a predetermined current value. As a result, the rate of charging can be limited. The charging current/maximum charging current may be smaller than a prior charging current/maximum charging current, i.e. the charging current/maximum charging current used during charging cycles when the energy storage device 106 was new or before the energy storage device 106 reached the end of its life.

A specific example of the change in charging voltage and/or charging current is set out below. In an example, when the energy storage device 106 is new, the energy storage device 106 may be charged with a (e.g. maximum) charging voltage of 4.40 V which may result in sufficient charge to provide energy for approximately 20 sessions of use. In contrast, when the energy storage device 106 has reached its end of life, the (e.g. maximum) charging voltage may be reduced down to 3.84 V, which may reduce the number of sessions for which the energy storage device 106 can provide power for to approximately 5. In a similar manner, the (e.g. maximum) charging current applied to the energy storage device 102 when it is new may be 3008 mA, whereas the (e.g. maximum) charging current applied when it has reached its end of life may be 192 mA. This may increase the charge time to approximately 6 hours.

Advantageously, limitation of the charging by reducing the charging voltage and/or the charging current may reduce the risks associated with operating an energy storage device 106 after the energy storage device has reached the end of its life e.g. short circuits and/or leakages. Additionally, the reduced maximum charge capacity and/or rate of charging of the energy storage device 106 may be detected by a user, as they may notice that the aerosol provision device 102 can only be used for a limited number of inhalations and/or it takes a notably longer time to charge. This may serve to prompt the user to replace the aerosol provision device 102 and/or the energy storage device 106 contained therein. The reduction in risk of operating the energy storage device 106 and/or the effective indication to a user that the energy storage device 106 has reached its end of life may be achieved while maintaining the usability of the aerosol provision device 102 (i.e. whilst continuing to supply energy from the energy storage device 106). This may, for example, be contrasted to prior art devices in which once end of life has been reached, further use of the aerosol provision device is prevented, i.e. it is 'bricked'.

In the embodiments set out above, in setting the charging parameter when the energy storage device 106 has reached its end of life such that it is changed compared to prior to having reached its end of life, the control arrangement 110 may be considered to increase the charging time (for a charging cycle) and/or reduce the energy stored by the energy storage device 106 thereby reducing the amount of energy which can be delivered by the energy storage device 106 (e.g. reducing the number of sessions for which the energy storage device 106 can provide power for).

Additionally or alternatively to the embodiments set out above, the control arrangement 110 may be configured to, when it is determined that the energy storage device 106 has reached its end of life to, permit discharging of the energy storage device 106 and set a discharging parameter of the energy storage device 106 such that discharging of the energy storage device 106 is changed (e.g. limited) compared to discharging of the energy storage device 106 prior to having reached its end of life.

In the present context, a discharge of the energy storage device 106 may be considered a release of energy stored in the energy storage device 106 sufficient to allow for at least one instance of generation of aerosol, e.g. by energising the heating arrangement 108 or actuation of a pump/valve. In some embodiments, a discharge of the energy storage device 106 may comprise sufficient power for the provision of a session of use by the aerosol provision device. A session of use may comprise a plurality of inhalations from the aerosol provision device (e.g. 2 or more inhalation, or 3 or more inhalation, or 4 or more inhalation, or 5 or more inhalation, or 6 or more inhalation, or 7 or more inhalation, or 8 or more inhalation, or 9 or more inhalation, or 10 or more inhalation, or a maximum of 10 inhalations). In some embodiments, the plurality of inhalations comprises 2-10 inhalations, e.g. 3-8 inhalations, e.g. 4-6 inhalations. In some embodiments, a session of use may correspond to the energy storage device 106 being capable of providing power for consumption by the aerosol provision device 102 for a period of 200-350 seconds, e.g. 220-330 seconds, e.g. 240-310 seconds, e.g. 260-290 seconds.

In some embodiments, the discharging parameter may be a maximum number of discharges of the energy storage device during a discharge cycle. A discharging cycle may be considered releasing the energy stored within the energy storage device 106 from at least partially (e.g. full) maximum capacity to at least partially (entirely) empty. For example, a discharging cycle may be considered releasing the energy stored within the energy storage device 106 from 100% to 0%, or from 90% to 10%, or from 80% to 20%, or from 70% to 30%, or from 60% to 40%. In some embodiments, a discharging cycle may be considered to be releasing of at least 50%, e.g. at least 60%, e.g. at least 70%, e.g. at least 80%, e.g. at least 90%, e.g. at least 100% of the storage capacity of the energy storage device 106, or the energy stored within the energy storage device 106.

The maximum number of discharges may be smaller than a previous number of discharges, e.g. the maximum number of discharges when the energy storage device was new or prior to reaching end of life, in such examples (i.e. prior to its end of life) the discharging parameter may not be set. In some embodiments, the maximum number of discharges may be set to be no more than 5, e.g. no more than 4, or no more than 3, or no more than 2, or no more than 1. A discharge may provide sufficient power for a session of use.

Additionally or alternatively, the discharge parameter may comprise a rate of discharge of the energy storage device 106. Setting of the discharging parameter in this manner may involve setting/limiting the discharge parameter to a reduced rate of discharge. The reduced rate of discharge may be a smaller value when compared to the value of the rate of discharge set during a discharging cycle having occurred prior to the energy storage device 106 having reached its end of life. The rate of discharge may be a maximum rate of discharge. In some embodiments, the rate of discharge may determine the rate at which the heating arrangement 108 increases in temperature/heats up. As such, the reduction in the rate of discharge may result in the heating arrangement 108 increasing in temperature/heats up slower when compared to the speed at which the heating arrangement 108 increases in temperature/heats up when the energy storage device 106 was new or prior to reaching the end of its life. In some embodiments, setting/limiting the discharge parameter comprises limiting a discharge current/voltage to below a predetermined discharge current/voltage threshold value. The thresholds may be any suitable values depending on the specifics of the energy storage device 106. As an example, if the voltage of the energy storage device is greater than or equal to 3.66 V, it will be possible for the energy storage device 106 to supply power for the use in further inhalation sessions and the current supply may be up to 6A. In contrast, if the voltage of the energy storage device 106 is greater than or equal to 2.9 V, but less than 3.66 V, the device 102 may be configured to prevent the supply of power for a new session of use, but still allow the user to power on the aerosol provision device 102, e.g. supplying a reduced electrical current (i.e. a predetermined discharge current threshold) of up to 120 mA to a haptic motor or any other suitable electrical component. The voltage supplied by the energy storage device 106 may be restricted in a similar manner.

In the embodiments set out above, the setting the discharging parameter is such that it is changed compared to prior to having reached its end of life, the control arrangement 110 may be considered to restrict the amount of energy which the energy storage device can deliver (irrespective of how much energy is stored therein) prior to needing recharging, e.g. reducing the number of sessions which can be obtained by a user before needing to recharge the device. In addition or alternatively, the control arrangement 110 may be considered to restrict the rate of discharge of the energy storage device 106 to the point such that the time it takes to produce an aerosol is increased and/or the rate of aerosol production is reduced, compared to prior to the aerosol provision device having reached its end of life.

Advantageously, the above-described control/limitation of the discharging may reduce the risk of injury to nearby persons, e.g. from short circuits and/or leakages, while maintaining usability of the aerosol provision device. Similar to the adaptation of the charging parameter set out above, setting of the discharging parameter in this manner may act to provide an indication to a user that the energy storage device 106 has reached its end of life. Specifically, the reduced functionality of the aerosol provision device 102, i.e. the reduced number of sessions which may be available and/or the increase in time it takes to generate an aerosol, may be detected by a user prompting them to replace the aerosol provision device 102 and/or the energy storage device 106.

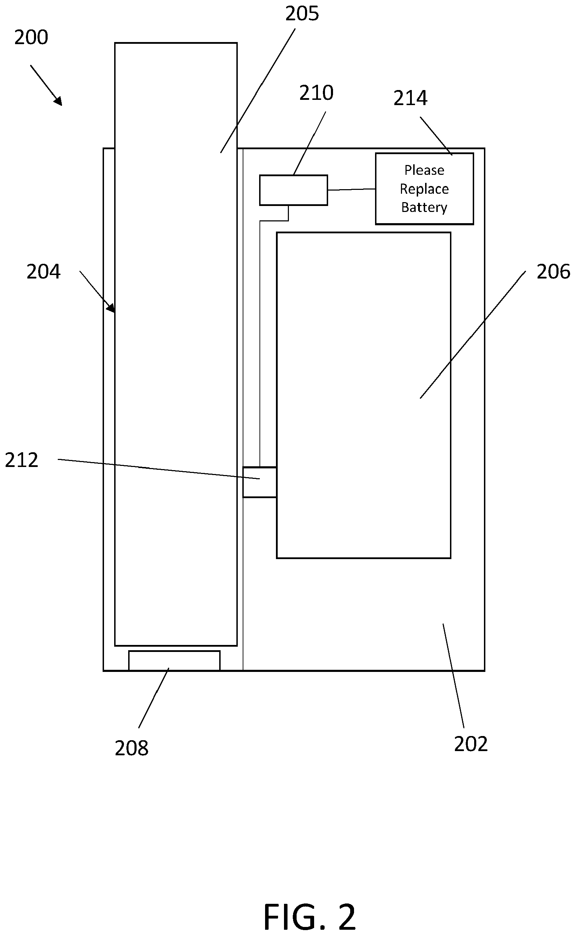

Figure 2 shows a schematic illustration (not to scale) of an aerosol provision system 200 comprising an aerosol provision device 202 in accordance with another embodiment of the present invention. Similar to the embodiment described above, the aerosol provision device 202 comprises an article receiving portion 204 (e.g. in the form of a cavity) for receiving an aerosol generating article 205. The aerosol provision device 202 further comprises an energy storage device 206, a heating arrangement 208, and a control arrangement 210. The components of the aerosol provision device 202 may be same as the components described above in relation to Figure 1. As such, repeat description of these components has been omitted.

In some embodiments, as depicted in Figure 2, the aerosol provision device 202 may further comprise a display 214. The display 214 may be communicatively coupled to the control arrangement 210. The display 214 may be configured to display information indicative of the energy storage device 206 having reached the end of its life. The control arrangement 210 may determine that the energy storage device 202 has reached its end of life in the same manner as the control arrangement 110 described above. Once the control arrangement 210 has determined that the energy storage device 202 has reached its end of life, it may cause the display 214 to output information indicative of the energy storage device 206 having reached its end of life. The display 214 may comprise any suitable display such as an LCD display or a LED display. The information indicative of the energy storage device 206 having reached the end of its life may be in the form of text or one or more symbols. For example, in response to determining the energy storage device 206 having reached the end of its life, the display 214 can display text that reads the following "end of life of battery reached" or "please replace battery". In other examples, in response to determining the energy storage device 206 having reached the end of its life, the display 214 can display a code to lead the user to a place, e.g. a website, where more detailed information can be found. This may allow for a large amount of information to be provided in a small and compact way.

Conventionally, indication of end of life may be provided by an LED light which may typically be used for providing a number of other indications. As such, the inventors found that such prior indications may lead to the user having difficulties determining when the energy storage device has reached the end of its life. This is because, the user will have to decipher or otherwise interpret the LED light. This may be an arduous task as it may involve referring to a manual. Advantageously, the display included in some embodiments, allows for a clear and easy to understand indication of when the energy storage device 202 has reached the end of its life.

The display 214 may be used to display other suitable information. For example, the display 214 may display one or more of: the operational mode in which the aerosol provision device 202 is operating, the state of charge of the energy storage device 206, the type of aerosol generating article 205 which is received by the article receiving portion 204, and/or the number of remaining sessions for which the energy storage device 206 can provide power, and/or the progression of an individual session, e.g. time remaining of a preheating period or time remaining of an actual session.

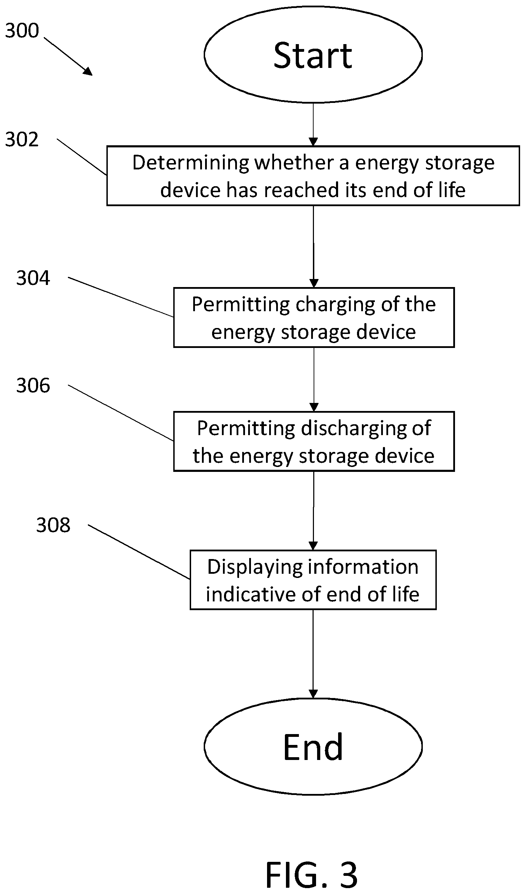

Figure 3 shows a flowchart of a method 300 for controlling operation of an energy storage device in an aerosol provision device. The method may be applied to any of the control arrangements set out above. The method 300 comprises determining 302 whether the energy storage device has reached its end of life.

This step 302 may comprise measuring, using a sensor, a parameter of the energy storage device. In some embodiments, the sensor may be configured to detect the expansion/swelling of the energy storage device, e.g. via a pressure/force sensor as described above. Additionally or alternatively, the sensor may be configured to measure the capacity of the energy storage device, e.g. via a capacitance sensor as described above. Additionally or alternatively, a timer may be configured to measure an amount of time that the energy storage device has been charging and/or discharging. Additionally or alternatively, the control arrangement 110 may be further configured count a number of times which the energy storage device 106 has discharged power and/or a number of sessions of use for which the energy storage device 106 has provided power for.

Furthermore, the determining step 302 may further comprising comparing the measured parameter with a predetermined threshold value. The determining 302 whether the energy storage device has reached its end of life may also comprise determining that an energy storage device has reached its end of life when the measured parameter falls below or exceeds or meets the predetermined threshold value. For example, determining that the energy storage device has reached its end of life when the expansion/swelling is in excess 10% of its original volume, or when the capacity falls below 80% of its original capacity, or when the time of charging and/or discharging exceeds 1000 hours, or when the number of a number of times which the energy storage device has discharged power exceeds 20000, or when the total power discharged by the energy storage device 106 exceeds 1400 Ah, or when a number of sessions of use for which the energy storage device has provided power for exceeds 5000, e.g. 10000 sessions, or the operating time of the energy storage device 106 exceeds 2 years.

In some embodiments, the method 300 further comprises, when it is determined that the energy storage device has reached its end of life, permitting 304 charging of the energy storage device. This step 304 may further comprise setting a charging parameter of the energy storage device such that charging of the energy storage device is changed (e.g. limited) compared to charging of the energy storage device prior to having reached its end of life. The charging parameter may be any of the above-described charging parameters, e.g. maximum charging current, maximum charging voltage, and maximum amount of energy stored within the energy storage device. The charging parameter may be chosen to be smaller than their respective values prior to the energy storage device reaching the end of its life.

In addition, or alternatively to step 304 set out above, when it is determined that the energy storage device has reached its end of life the method may comprise step 306 which comprises permitting discharging of the energy storage device. Step 306 may further comprise setting a discharging parameter of the energy storage device such that discharging of the energy storage device is changed (e.g. limited) compared to discharging of the energy storage device prior to having reached its end of life. The discharging parameter may be any of the above-described discharging parameters, e.g. rate of discharge, maximum discharge current/voltage, and number of discharges (e.g. discharges sufficient to provide power for a session) per discharge cycle.

In addition, or alternatively to steps 304, 306 set out above, the method 300 may further comprise displaying 308, by a display, information indicative of the energy storage device having reached the end of its life. The display is communicatively coupled to the control arrangement.

The steps described above are merely illustrative and the order in which the steps are described in are not essential. Indeed, any of the above described steps may be performed before or after or concurrent with any of other steps. Moreover, any of the steps can be omitted entirely. Any features of the aerosol provision device and system set out in the embodiments above may equally be implemented in the method set out above.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. A control arrangement for use with an aerosol provision device comprising an energy storage device, wherein the control arrangement is configured to:
determine whether the energy storage device has reached its end of life; and
when it is determined that the energy storage device has reached its end of life to:
permit charging of the energy storage device and set a charging parameter of the energy storage device such that charging of the energy storage device is changed compared to charging of the energy storage device prior to having reached its end of life; and/or
permit discharging of the energy storage device and set a discharging parameter of the energy storage device such that discharging of the energy storage device is changed compared to discharging of the energy storage device prior to having reached its end of life.

2. The control arrangement of claim 1, wherein the charging parameter comprises at least one of: a charging voltage and a charging current of a charging cycle of the energy storage device.

3. The control arrangement of claim 2, wherein the charging voltage is a maximum charging voltage applied during a charging cycle and/or the charging current is a maximum charging current applied during a charging cycle.

4. The control arrangement of claim 2 or claim 3, wherein the control arrangement is configured to set the charging parameter by reducing the charging voltage and/or the charging current compared to a prior charging voltage and/or a prior charging current applied during a prior charging cycle having occurred prior to the energy storage device having reached its end of life.

5. The control arrangement of any preceding claim, wherein the discharging parameter comprises a maximum number of discharges of the energy storage device during a discharge cycle.

6. The control arrangement of any preceding claim, wherein the discharge parameter comprises a rate of discharge of the energy storage device.

7. The control arrangement of claim 6, wherein setting the discharge parameter comprises reducing the rate of discharge compared to the rate of discharge set during a discharging cycle having occurred prior to the energy storage deice having reached its end of life.

8. The control arrangement of any preceding claim, wherein setting the discharge parameter comprises limiting a discharge current and/or voltage to below a predetermined discharge current and/or voltage threshold value.

9. The control arrangement of any preceding, further comprising a sensor configured to determine measure a characteristic of the energy storage device; and optionally wherein the characteristic is at least one of: an expansion rate, an amount of expansion, a storage capacity, a change of the storage capacity, a state of health, the time taken to charge the energy storage device, a number of times which the energy storage device has discharged power and a number of sessions of use for which the energy storage device has provided power for.

10. The control arrangement of claim 9, wherein the control arrangement is configured to determine that the energy storage device has reached its end of life when the measured characteristic meets a pre-determined threshold.

11. An aerosol provision device comprising:
an energy storage device; and
a control arrangement according to any preceding claim.

12. An aerosol provision system comprising:
an article comprising an aerosol generating medium; and
an aerosol provision device according to claim 11.

13. A method for controlling operation of an energy storage device in an aerosol provision device, the method comprising:
determining whether the energy storage device has reached its end of life; and
when it is determined that the energy storage device has reached its end of life:
permitting charging of the energy storage device and setting a charging parameter of the energy storage device such that charging of the energy storage device is changed compared to charging of the energy storage device prior to having reached its end of life; and/or
permitting discharging of the energy storage device and setting a discharging parameter of the energy storage device such that discharging of the energy storage device is changed compared to discharging of the energy storage device prior to having reached its end of life.

14. An aerosol provision device comprising:
an energy storage device;
a control arrangement configured to determine whether the energy storage device has reached an end of its life; and
a display communicatively coupled to the control arrangement, wherein the display is configured to display information indicative of the energy storage device having reached the end of its life.

15. A method for operating an aerosol provision device, the method comprising:
determining, by a control arrangement, whether an energy storage device of the aerosol provision device has reached the end of its life; and
displaying, by a display communicatively coupled to the control arrangement, information indicative of the energy storage device having reached the end of its life.
